# NEUE EUROPÄISCHE PATENTSCHRIFT

(11) **EP 0 893 745 B2**
(45) Veröffentlichungstag und Bekanntmachung des Hinweises auf die Entscheidung über den Einspruch: **02.07.2008**
(45) Hinweis auf die Patenterteilung: 05.02.2003
(21) Anmeldenummer: 98111059.6
(22) Anmeldetag: 17.06.1998
(51) Int. Cl.: G05B 19/042

(54) **Kommunikationsmodul**
Communication module
Module de communication

(30) Priorität: 24.07.1997 DE 19731883
(43) Veröffentlichungstag der Anmeldung: 27.01.1999
(73) Patentinhaber: ABB PATENT GmbH, 68526 Ladenburg (DE)
(72) Erfinder: Rosch, Rainer, Dr.-Ing., 58513 Lüdenscheid (DE); Zapp, Robert, Dipl.-Ing., 58579 Schalksmühle (DE)
(74) Vertreter: Miller, Toivo

(56) Entgegenhaltungen:
- EP-A- 0 275 992
- EP-A- 0 375 786
- DE-A- 3 902 471
- "ALTIVAR 16 AC Drive Catalog" Februar 1996 (1996-02) , SQUARE D - GROUPE SCHNEIDER , USA XP002107507 * Seite 3 * * Seite 7 * * Seite 10 *
- HAPPACHER M: "DAS VERNETZTE EIGENHEIM" ELEKTRONIK, Bd. 44, Nr. 18, 5. September 1995 (1995-09-05), Seiten 50-54, 56, 58, XP000529579 ISSN: 0013-5658
- "IT WASHES] IT RINSES] IT TALKS]" MACHINE DESIGN, Bd. 63, Nr. 18, 12. September 1991 (1991-09-12), Seiten 43-47, XP000264841 ISSN: 0024-9114

## Beschreibung

Die Erfindung bezieht sich auf ein Kommunikationsmodul für Elektrogeräte, die für einen Anschluß an ein Bussystem der Gebäudesystemtechnik vorbereitet oder mittels erforderlicher Schnittstelleneinrichtungen ausgerüstet sind.

Elektrogeräte, wie Beleuchtungseinrichtungen, Waschmaschinen, Trockner und dergl., die an ein Bussystem der Gebäudesystemtechnik anschließbar sein sollen, müssen geeignete Schnittstelleneinrichtungen aufweisen.

Marktgängig und entsprechend in Gebäuden vorhanden sind jedoch Bussysteme unterschiedlicher Art. Insbesondere ist der Europäische Installationsbus EIB bekannt, der besondere Busleitungen zur Kommunikation erfordert. Daneben sind Netzbussysteme bekannt, wie beispielsweise der in der Druckschrift BJE 0001-01-0750/4.96/0502 der Busch-Jaeger Elektro GmbH, Lüdenscheid beschriebene Busch-Powernet EIB. Ein solches Netzbussystem benötigt keine besonderen Busleitungen, da zur Signalübertragung das 230V-Netz benutzt wird.

Die zur Verbindung eines Elektrogeräts mit einem der Bussysteme erforderlichen Schnittstelleneinrichtungen sind dementsprechend unterschiedlich. Das bedeutet, daß werkseitig Elektrogeräte unterschiedlich ausgeführt werden müssen, je nachdem an welches der Bussysteme die Geräte anschließbar sein sollen, bzw. ob die überhaupt busfähig ausgeführt sein sollen. Dies führt zu einer aufwendigen Lagerhaltung.

Der Erfindung liegt daher die Aufgabe zugrunde, ein in einen Aufnahmeschacht eine Elektrogerätes einsteckbares Buskommunikationsmodul anzugeben, wobei der Aufnahmeschacht mit einer Steckbuchsenleiste ausgestattet ist, zu deren Buchse Daten- und Versorgungsleitungen und Netzzuführungen des Elektrogerätes geführt sind.

Diese Aufgabe wird durch ein Kommunikationsmodul mit den im Anspruch 1 angegebenen Merkmalen gelöst.

Eine Beschreibung der Erfindung erfolgt nachstehend anhand eines in Zeichnungen dargestellten Ausführungsbeispiels.

Es zeigen:
- Fig. 1: eine Prinzipdarstellung eines Elektrogeräts mit Aufnahmeschacht für Bus-Kommunikationssysteme,
- Fig. 2: den Aufnahmeschacht mit einem eingesteckten Netz-bus-Kommunikationsmodul,
- Fig. 3: zwei Ansichten des in der Anordnung gemäß Figur 2 enthaltenen Netz-bus-Kommunikationsmoduls.

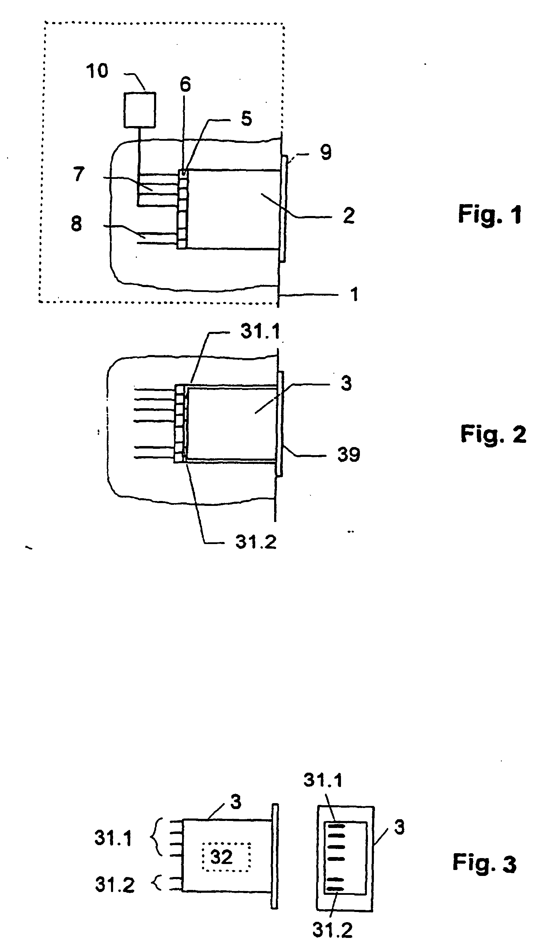

Figur 1 zeigt in einer Prinzipdarstellung ein Elektrogerät 1, wobei ein Gehäuse dargestellt ist mit einem Aufnahmeschacht 2 für steckbare Module 3 (vergl. Figur 2 und 3). Der Aufnahmeschacht 2 weist dazu an seiner Rückwand eine Steckbuchsenleiste 5 auf, an deren Steckbuchsen 6 Daten- und Versorgungsleitungen 7 angeschlossen sind, die mit einer elektrischen Einrichtung 10 verbunden sind. Außerdem enden an Steckbuchsen 6 Netzzuführleitungen 8. Wenn kein Modul eingesteckt ist, kann der Schacht 2 mit einer Blindabdeckung 9 abgedeckt werden.

Die elektronische Einrichtung 10 kann beispielsweise ein im Elektrogerät ohnehin vorhandener Mikroprozessor sein, der eine Software enthält, die erkennt, welcher Art ein eingestecktes Modul ist und in entsprechender Weise mit dem Modul bzw. Mittels des Moduls mit anderen Busteilnehmern kommuniziert.

Figur 2 zeigt einen Ausschnitt eines so vorbereiteten Elektrogeräts 1 mit einem in den Schacht 2 eingesteckten Netzbus (z.B. Powernet-Bus)-Kommunikationsmodul 3. Das Modul 3 ist außerdem in Figur 3 in einer Seitenansicht und einer Ansicht auf seine rückseitigen Steckkontakte 31.1, 31.2 dargestellt. An seiner Frontseite weist das Modul 3 eine Abdeckplatte 39 entsprechend der Blindabdeckung 9 auf. Das Netzbus-Kommunikationsmodul 3 enthält die Funktionseinheiten einer Busankopplung 32, mit deren Hilfe Bussignale von den Netzzuführleitungen 7 nach entsprechender Umsetzung über die Datenleitungen 8 zur elektronischen Einrichtung 10 sowie in umgekehrter Richtung leitbar sind.

Für die Verbindung mit den Datenleitungen 7 weist das Modul 3 eine erste Gruppe von Steckkontakten 31.1 und zur Verbindung mit den Netzzuführleitungen 8 eine zweite Gruppe von Steckkontakten 31.2 auf, die den Sicherheitsanforderungen entsprechend räumlich voneinander getrennt sind.

Um das Elektrogerät 1 busfähig zu machen, muß also lediglich das Netzbus-Kommunikationsmodul 3 in den Schacht 2 eingesteckt werden. Es sind keine weiteren Maßnahmen erforderlich, da die Geräte-Software erkennt, welches Modul vorhanden ist und die Kommunikationsfähigkeit nutzt.

## Patentansprüche

1. Kommunikationsmodul (3), das bezüglich seiner Bauform für den Einschub in einen Aufnahmeschacht (2) eines Elektrogerätes (1) gestaltet ist und Steckkontakte (31.1, 31.2) zur Kontaktierung mit Steckbuchsen (6) des Elektrogerätes (1) aufweist, **dadurch gekennzeichnet, dass** das Kommunikationsmodul als Netzbus-Kommunikationsmodul ausgebildet ist und die Funktionseinheiten einer Busankopplung (32) enthält, womit Signale von Datenleitungen (7) des Elektrogerätes (1) über dessen Buchsen (6) und eine erste Steckkontakt-Gruppe (31.1) zur Busankopplung (32) leitbar sind, sowie nach entsprechender Umsetzung über eine zweite Steckkontakt-Gruppe (31.2) zu Netzzuführleitungen (8) und in umgekehrter Richtung weiterleitbar sind.

## Claims

1. A communications module (3) which in respect of its configuration is arranged for insertion into a slide-in compartment (2) of an electric appliance (1) and comprises plug-in contacts (31.1, 31.2) for making contact with socket-contacts (6) of the electric appliance (1), **characterized in that** the communications module is arranged as a netbus communications module and contains functional units of a bus coupling (32) with which signals of data lines (7) of the electric appliance (1) can be guided via its sockets (6) and a first plug-in contact group (31.1) to the bus coupling (32), and can be guided further after respective conversion via a second plug-in contact group (31.2) to network feed lines (8) and in the opposite direction.

## Revendications

1. Module de communication (3), dont la forme est conçue en vue d'une insertion dans une gaine de logement (2) d'un appareil électrique (1) et qui possède des contacts de branchement (31.1, 31.2) pour la mise en contact avec des prises de branchement (6) de l'appareil électrique (1), **caractérisé en ce que** le module de communication est conformé comme un module de communication de bus réseau et contient les unités fonctionnelles d'un couplage de bus (32), grâce auxquelles des signaux de lignes de données (7) de l'appareil électrique (1) peuvent être transmises par l'intermédiaire de ces prises (6) et d'un premier groupe de contacts de branchement (31.1) au couplage de bus (32), et peuvent être transmises après une conversion appropriée via un deuxième groupe de contacts de branchement (31.2) à des lignes d'alimentation du réseau (8) et inversement.
